# EUROPEAN PATENT APPLICATION

(11) **EP 4 797 508 A1**
(43) Date of publication of application: **26.08.2026**
(21) Application number: 25158917.2
(22) Date of filing: 19.02.2025
(51) Int. Cl.: H02K 5/16

(54) **ELECTRIC MACHINE FOR VEHICLE PROPULSION, ELECTRICAL INSULATION ELEMENT FOR THE ELECTRIC MACHINE, AND METHOD FOR MANUFACTURING THE ELECTRIC MACHINE**

(71) Applicant: Volvo Car Corporation, 405 31 Göteborg (SE)
(72) Inventor: JAKTLING, Staffan, 40531 Göteborg (SE); PALING, Sebastian, 40531 Göteborg (SE)
(74) Representative: Kransell & Wennborg KB

(57) **Abstract**

The disclosure relates to an electric machine (100) for vehicle propulsion. The electric machine (100) comprises a housing (150). The electric machine (100) comprises a rotor with a rotor shaft (120). The electric machine (100) further comprises at least one bearing (130). Further, the electric machine (100) comprises a first electrical insulation element (140) having an inner cavity. The rotor shaft (120) is supported on the housing (150) of the electric machine (100) by the at least one bearing (130). The at least one bearing (130) is arranged in the inner cavity of the first electrical insulation element (140). The first electrical insulation element (140) is rigid. The disclosure further relates to a first electrical insulation element (140) for the electric machine (100). Further, the disclosure relates to a method for manufacturing the electric machine (100).

## Description

### TECHNICAL FIELD

The present disclosure relates to an electric machine for vehicle propulsion.

The disclosure further relates to a first electrical insulation element for the electric machine.

Further, the disclosure relates to a method for manufacturing the electric machine.

### BACKGROUND ART

In a conventional electric motor, a rotor shaft is supported by a lubricated bearing, where the lubrication may serve as a weak insulation film between the rolling elements from the races of the bearing. In operation, the strong current in the stator windings may charge the rotor, which is fastened to the rotor shaft. Such charges may be discharged through the bearings breaking the weak insulation film and reaching the housing of the electric motor. This spark may heat up the bearing locally, which causes local deformation. Such deformation over time may degrade the bearing. Conventionally, such issue is addressed by a so-called ground ring electrically connecting the rotor shaft to the housing.

### SUMMARY

The objective of the present disclosure is to improve an electric machine for vehicle propulsion.

The problem is at least partially solved or alleviated by the subject matter of the independent claims of the present disclosure, wherein further examples are incorporated in the dependent claims.

According to a first aspect, there is provided an electric machine for vehicle propulsion. The electric machine comprises a housing. The electric machine comprises a rotor SE:TOP with a rotor shaft. Further, the electric machine comprises at least one bearing. The electric machine further comprises a first electrical insulation element having an inner cavity. The rotor shaft is supported on the housing of the electric machine by the at least one bearing. The at least one bearing is arranged in the inner cavity of the first electrical insulation element. The first electrical insulation element is rigid.

The first electrical insulation element may be referred to as an electrical insulation sleeve, where a sleeve may be defined as a surface for circumferentially surrounding an object in an axial direction, and optionally the surface for further surrounding the objection in a radial direction.

The electric machine may be operated as an electric motor.

The vehicle may be a motor vehicle propelled by an electric motor.

The housing of the electric machine may be electrically conductive.

The inner cavity of the housing of the electric machine may be electrically conductive.

The rotor shaft may be electrically conductive.

The at least one bearing may be made from at least one electrically conductive material. Accordingly, the housing may be electrically conductive.

The at least one bearing may be electrically coupled to the rotor shaft.

The at least one bearing may comprise an inner race and an outer race.

The at least one bearing may further comprise a plurality of rolling elements, such as balls or rollers.

The rolling elements may be arranged between the inner race and the outer race.

The inner race comprises a ring-shaped tube segment.

The outer race comprises a ring-shaped tube segment.

A ring-shaped tube segment may be a side panel of a cylinder having a cylindrical hole therethrough, such that the resulting cylinder is a shape of a ring extending in an axial direction.

The rotor shaft is arranged through the inner race.

An important feature of an electric machine is the air gap between the rotor and the stator, more precisely the rotor windings and the stator windings. This air gap is usually relatively small, e.g. below 3mm, often even below 2 mm and sometimes even below 1mm. During operation of the electric machine, this airgap needs to be maintained in order to avoid undesired collisions between the rotor and the stator. In this context, the rigidity of the insulation element allows for precise positioning of the rotor, thereby precisely keeping the airgap.

The rigidity of the first electrical insulation element may be obtained based on the Young's modulus.

The electric machine according to the first aspect may advantageously improve electrical insulation of the bearing by placing a first electrical insulation element between the housing and the at least one bearing, thereby preventing a spark from inducing through the bearing.

Additionally or alternatively, the electric machine according to the first aspect may advantageously improve the ease of assembly.

Additionally or alternatively, the electric machine according to the first aspect may advantageously improve structural simplicity.

Additionally or alternatively, the electric machine according to the first aspect may advantageously reduce the number of required parts.

Additionally or alternatively, the electric machine according to the first aspect may advantageously allow to reliably and precisely support the shaft on the housing, specifically owing to the rigidity of the first electrical insulation element.

According to an example, the first electrical insulation element comprises a ring-shaped tube segment circumferentially surrounding the at least one bearing.

The ring-shaped tube segment may comprise or be a sleeve.

The electric machine according to the example above may advantageously improve the homogeneity of an electrical insulation in radial directions of the at least one bearing.

According to an example, the first electrical insulation element has a flange extending radially inward for axially positioning the at least one bearing.

The flange may extend from at least part of an edge of the first electrical insulation element.

The flange may extend from at least part of an edge of the ring-shaped tube segment of the first electrical insulation element.

The electric machine according to the example above may advantageously improve the positioning of the at least one bearing, specifically by preventing the at least one bearing from slipping in an axial direction when the electric machine is in operation.

According to an example, the first electrical insulation element comprises an electrically non-conducting metal.

The electrically non-conducting metal may be an insulator or an insulation metal.

The electric machine according to the example above may advantageously improve electrical insulation of the first electrical insulation element.

Alternatively or additionally, according to an example, the first electrical insulation element comprises a polymer material. According to another example, the first electrical insulation element comprises a polymer composite material.

The electric machine according to the example above may advantageously improve insulation, corrosion resistance, and/ or abrasion resistance of the first electrical insulation element.

Alternatively or additionally, according to an example, the first electrical insulation element comprises a hybrid composite material.

The hybrid composite material is a material in which two or more kinds of fibers are incorporated into a single matrix material or vice versa.

The electric machine according to the example above may advantageously improve at least one of: electrical insulation, strength, stiffness, bending, thermal distortion stability, weight, fatigue resistance, and notch sensitivity.

Alternatively or additionally, according to an example, the first electrical insulation element comprises a 3D printable material.

The electric machine according to the example above may advantageously improve a customizability by allowing 3D printing the first electrical insulation element.

According to an example, the electric machine further comprises a second electrical insulation element being arranged between the at least one bearing and a retaining ring of the electrical machine, for electrically insulating the at least one bearing.

The second electrical insulation element is disc-shaped, i.e., a circular plate with a circular hole in the center for arranging the rotor shaft therethrough.

The second electrical insulation element may alternatively be referred to as an electrical insulation ring.

The diameter of the circular hole may be equal to or larger than the diameter of the shaft.

The diameter of the circular hole may be equal to or smaller than the diameter of the diameter of the inner edge of the outer race of the at least one bearing.

The diameter of the circular hole may be equal to or smaller than the diameter of the inner edge of the retaining ring.

One surface of the second electrical insulation element is arranged to face the at least one bearing, while the opposite surface of the second electrical insulation element is arranged to face the retaining ring.

The second electrical insulation element comprises at least one of a non-conducting metal, a polymer composite material, a hybrid composite material, and a 3D printable material.

The second electrical insulation element may be rigid.

The retaining ring may be used for axially locking the at least one bearing.

The retaining ring may be arranged at least partially inside a recess in the housing of the electric machine.

The retaining ring may be made of or comprise electrically conducting material. Accordingly, the retaining ring may be electrically conductive.

The retaining ring may be a circlip.

The second electrical insulation element may comprise at least one protrusion on a surface facing the at least one bearing for rotationally interlocking with the at least one bearing.

The second electrical insulation element may comprise at least one recess on a surface facing the retaining ring for rotationally interlocking with the retaining ring.

The electric machine according to the example above may advantageously prevent an electrical path from forming between the bearing and the retaining ring, thereby preventing the spark from forming in the bearing.

Herein, the first electrical insulation element may refer to a first type of electrical insulation element, and similarly the second electrical insulation element may refer to a second type of electrical insulation element. There may be one or more of the first type of electrical insulation element and/or similarly, there may be one or more of the second type of the electrical insulation element.

According to an example, the first electrical insulation element has at least one protrusion on an inner surface and the at least one bearing has at least one recess on a surface facing the first electrical insulation element for fitting into the at least one protrusion of the first electrical insulation element.

Herein, the term recess may refer to a hollow cavity formed on a surface.

The term recess may comprise or be a groove or cavity.

The at least one protrusion and/or the at least one recess may be of any shape and/or dimension.

For instance, the at least one protrusion may run along at least a part of the circumference of the inner surface.

Additionally or alternatively, the at least one protrusion may run along at least a part of the inner surface in a spiral form.

Additionally or alternatively, the at least one protrusion may run along at least part of the inner surface in an axial direction.

Additionally or alternatively, the at least one protrusion may be a clasp.

The at least one recess may run along at least a part of the circumference of the surface of the at least one bearing, wherein the surface of the at least one bearing faces the first electrical insulation element.

Additionally or alternatively, the at least one recess may run along at least a part of the surface of the at least one bearing in a spiral form, wherein the surface of the at least one bearing faces the first electrical insulation element.

Additionally or alternatively, the at least one recess may run along at least a part of the surface of the at least one bearing in an axial direction, wherein the surface of the at least one bearing faces the first electrical insulation element.

Additionally or alternatively, the at least one recess may be a ring for a corresponding clasp.

The at least one protrusion may be arranged at least partially inside the at least one recess.

The electric machine according to the example above may advantageously allow interlocking the at least one bearing against first electrical insulation element, thereby preventing the at least one bearing from slipping, specifically when the electric machine is in operation.

The interlocking and/or slipping may be rotational or in an axial direction.

Alternatively or additionally, according to an example, the first electrical insulation element has at least one recess on an inner surface and the at least one bearing has at least one protrusion on a surface facing the first electrical insulation element for fitting into the at least one recess of the first electrical insulation element.

The at least one protrusion and/or the at least one recess may be of any shape and/or dimension.

For instance, the at least one protrusion may run along at least a part of the circumference of the surface of the at least one bearing facing the first electrical insulation element.

Additionally or alternatively, the at least one protrusion may run along at least a part of the surface of the at least one bearing facing the first electrical insulation element in a spiral form.

Additionally or alternatively, the at least one protrusion may run along at least part of the surface of the at least one bearing facing the first electrical insulation element in an axial direction.

Additionally or alternatively, the at least one protrusion may be a clasp.

The at least one recess may run along at least a part of the circumference of the inner surface.

Additionally or alternatively, the at least one recess may run along at least a part of the inner surface in a spiral form.

Additionally or alternatively, the at least one recess may run along at least part of the inner surface in an axial direction.

Additionally or alternatively, the at least one recess may be a ring for a corresponding clasp.

The at least one protrusion may be arranged at least partially inside the at least one recess.

The electric machine according to the example above may advantageously allow interlocking between the at least one bearing and the first electrical insulation element, thereby preventing the at least one bearing from slipping when the electric machine is in operation. The interlocking and/or slipping may be rotational or in an axial direction.

According to an example, the first electrical insulation element has at least one protrusion on an outer surface and the housing has at least one recess on a surface facing the first electrical insulation element for fitting into the at least one protrusion of the first electrical insulation element.

The at least one protrusion and/or the at least one recess may be of any shape and/or dimension.

For instance, the at least one protrusion may run along at least a part of the circumference of the outer surface of the first electrical insulation element.

Additionally or alternatively, the at least one protrusion may run along at least a part of the outer surface of the first electrical insulation element.

Additionally or alternatively, the at least one protrusion may run along at least part of the outer surface of the first electrical insulation element in an axial direction.

Additionally or alternatively, the at least one protrusion may be a clasp.

It is understood by the skilled person that the at least one recess may comprise or be the corresponding cavity for fitting in the protrusion of any one of the examples above.

The electric machine according to the example above may advantageously allow interlocking between the first electrical insulation element and the housing, thereby preventing the first electrical insulation element from slipping when the electric machine is in operation. The interlocking and/or slipping may be rotational or in an axial direction.

Alternatively or additionally, according to an example, the first electrical insulation element has at least one recess on an outer surface and the housing has at least one protrusion on a surface facing the first electrical insulation element for fitting into the at least one recess of the first electrical insulation element.

The at least one protrusion and/or the at least one recess may be of any shape and/or dimension.

For instance, the at least one protrusion may run along at least a part of the circumference of the surface of the housing facing the first electrical insulation element.

Additionally or alternatively, the at least one protrusion may run along at least a part of the surface of the housing facing the first electrical insulation element in a spiral form.

Additionally or alternatively, the at least one protrusion may run along at least part of the surface of the housing facing the first electrical insulation element in an axial direction.

Additionally or alternatively, the at least one protrusion may be a clasp.

It is understood by the skilled person that the at least one recess may comprise or be the corresponding cavity for fitting in the protrusion of any one of the examples above.

The electric machine according to the example above may advantageously allow interlocking between the first electrical insulation element and the housing, thereby preventing the first electrical insulation element from slipping when the electric machine is in operation. The interlocking and/or slipping may be rotational or in an axial direction.

According to an example, the first electrical insulation element is rotationally locked against the housing.

When the first electrical insulation element is rotationally locked against the housing, the rotation of the first electrical insulation element may be synchronized, or may reach a synchronization with a delay, with the rotation of the housing.

The housing may be rotationally stationary.

The electric machine according to the example above may advantageously prevent the first electrical insulation element from rotationally slipping when the electric machine is in operation.

According to an example, the first electrical insulation element is rotationally locked against the at least one bearing.

When the first electrical insulation element is rotationally locked against the at least one bearing, the rotation of the first electrical insulation element may be synchronized, or may reach a synchronization with a delay, with the rotation of the at least one bearing.

The electric machine according to the example above may advantageously prevent the at least one bearing from rotationally slipping with respect to the first electrical insulation element when the electric machine is in operation.

According to a second aspect, there is provided a first electrical insulation element for the electric machine of any one of the examples of the first aspect. The first electrical insulation element is rigid and has an inner cavity for receiving at least one bearing supporting a rotor shaft.

The first electrical insulation element according to the second aspect may advantageously improve an electrical insulation of the bearing by placing a first electrical insulation element between the housing and the at least one bearing, thereby preventing a spark from inducing through the bearing.

Additionally or alternatively, the first electrical insulation element according to the second aspect may advantageously improve the ease of assembly.

Additionally or alternatively, the first electrical insulation element according to the second aspect may advantageously improve structural simplicity.

Additionally or alternatively, the first electrical insulation element according to the second aspect may advantageously reduce the number of required parts.

Additionally or alternatively, the first electrical insulation element according to the second aspect may advantageously allow to reliably and precisely support the shaft on the housing of an electric machine.

According to an example, the first electrical insulation element comprises a ring-shaped tube segment.

The ring-shaped tube segment may comprise or be a sleeve.

The first electrical insulation element according to the example above may advantageously improve the homogeneity of an electrical insulation in radial directions of the at least one bearing.

According to an example, the first electrical insulation element has a flange extending radially from the ring-shaped tube segment for positioning the at least one bearing.

The first electrical insulation element according to the example above may advantageously improve the positioning of the at least one bearing, specifically by preventing the at least one bearing from slipping in an axial direction when the electric machine is in operation.

According to an example, the first electrical insulation element has at least one protrusion and/or at least one recess on an inner surface.

The first electrical insulation element according to the example above may advantageously allow interlocking between the first electrical insulation element and the housing, thereby preventing the first electrical insulation element from slipping when the electric machine is in operation. The interlocking and/or slipping may be rotational or in an axial direction.

According to an example, the first electrical insulation element has at least one protrusion and/or at least one recess on an outer surface.

The first electrical insulation element according to the example above may advantageously allow interlocking between the first electrical insulation element and the housing, thereby preventing the first electrical insulation element from slipping when the electric machine is in operation.

According to an example, the first electrical insulation element comprises a non-conducting metal.

The first electrical insulation element according to the example above may advantageously improve electrical insulation of the first electrical insulation element.

According to an example, the first electrical insulation element comprises a polymer composite material.

The first electrical insulation element according to the example above may advantageously improve at least one of the material properties of the first electrical insulation element, including an improved electrical insulation, an improved corrosion resistance, and an improved abrasion resistance.

According to an example, the first electrical insulation element comprises a hybrid composite material.

The first electrical insulation element according to the example above may advantageously improve at least one of the material properties of the first electrical insulation element, including an improved electrical insulation, a balanced strength, a balanced stiffness, a balanced bending, an improved thermal distortion stability, a reduced weight, an improved fatigue resistance, and an improved notch sensitivity.

According to an example, the first electrical insulation element comprises a 3D printable material.

The first electrical insulation element according to the example above may advantageously improve customizability by allowing 3D printing the first electrical insulation element.

According to a third aspect, there is provided a method for manufacturing the electric machine of any one of the examples of the first aspect. The method comprises interposing a first electrical insulation element between the at least one bearing and the housing of the electric machine.

The method according to the third aspect may advantageously improve an electrical insulation of the bearing by placing a first electrical insulation element between the housing and the at least one bearing, thereby preventing a spark from inducing through the bearing.

Additionally or alternatively, the method according to the third aspect may advantageously improve the ease of assembly.

Additionally or alternatively, the method according to the third aspect may advantageously improve structural simplicity.

Additionally or alternatively, the method according to the third aspect may advantageously reduce the number of required parts.

Additionally or alternatively, the method according to the third aspect may advantageously allow to reliably and precisely support the shaft on the housing of an electric machine.

According to an example, the method further comprises rotationally locking the first electrical insulation element against the housing.

The method according to the example above may advantageously prevent the first electrical insulation element from rotationally slipping from the housing or vice versa, specifically when the electric machine is in operation.

According to an example, the method further comprise rotationally locking the first electrical insulation element against the at least one bearing.

The method according to the example above may advantageously prevent the at least one bearing from rotationally slipping from the first electrical insulation element, or vice versa, specifically when the electric machine is in operation.

According to a further aspect, there is provided a second electrical insulation element for the electric machine of any one of the examples of the first aspect. The second electrical insulation element is rigid and is disc-shaped for arranging a rotor shaft through central hole of the second electrical insulation.

The second electrical insulation element may be arrangeable between the at least one bearing and a retaining ring of the electrical machine, for electrically insulating the at least one bearing.

The disc-shape may be defined as a circular plate with a circular hole in the center for arranging the rotor shaft therethrough.

The second electrical insulation element may alternatively be referred to as an electrical insulation ring.

The diameter of the circular hole may be equal to or larger than the diameter of the shaft.

The diameter of the circular hole may be equal to or smaller than the diameter of the diameter of the inner edge of the outer race of the at least one bearing.

The diameter of the circular hole may be equal to or smaller than the diameter of the inner edge of the retaining ring.

One surface of the second electrical insulation element is arranged to face the at least one bearing, while the opposite surface of the second electrical insulation element is arranged to face the retaining ring.

The second electrical insulation element comprises at least one of a non-conducting metal, a polymer composite material, a hybrid composite material, and a 3D printable material.

The retaining ring may be used for axially locking the at least one bearing.

The retaining ring may be arranged at least partially inside a recess in the housing of the electric machine.

The retaining ring may be made of or comprise electrically conducting material. Accordingly, the retaining ring may be electrically conductive.

The retaining ring may be a circlip.

The second electrical insulation element may comprise at least one protrusion on a surface facing the at least one bearing for rotationally interlocking with the at least one bearing.

The second electrical insulation element may comprise at least one recess on a surface facing the retaining ring for rotationally interlocking with the retaining ring.

The second electrical insulation element according to the example above may advantageously prevent an electrical path from forming between the bearing and the retaining ring, thereby preventing the spark from forming in the bearing.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically illustrates a cross-sectional view of an electric machine for vehicle propulsion according to an example of the present disclosure.
- Figure 2: illustrates a first section of the electric machine as shown in Figure 1, wherein the section of Figure 2 is more detailed than the section of Figure 1.
- Figure 3: illustrates an exploded view of the section of the electric machine as shown in Figure 2.
- Figure 4: illustrates an example electrical insulation element of the first electrical insulation element as shown in Figure 3.
- Figure 5: illustrates another electrical insulation element of the first electrical insulation element as shown in Figure 3.
- Figure 6: illustrates a second section of the electric machine as shown in Figure 1, wherein the second of Figure 6 is more detailed than the section of Figure 1.
- Figure 7: illustrates an exploded view of the section of the electric machine as shown in Figure 6.
- Figure 8: illustrates a method according to an example of the present disclosure.

### DETAILED DESCRIPTION

The Figures are merely schematic representations and serve only to illustrate examples of the disclosure. Identical or equivalent elements are in principle provided with the same reference signs.

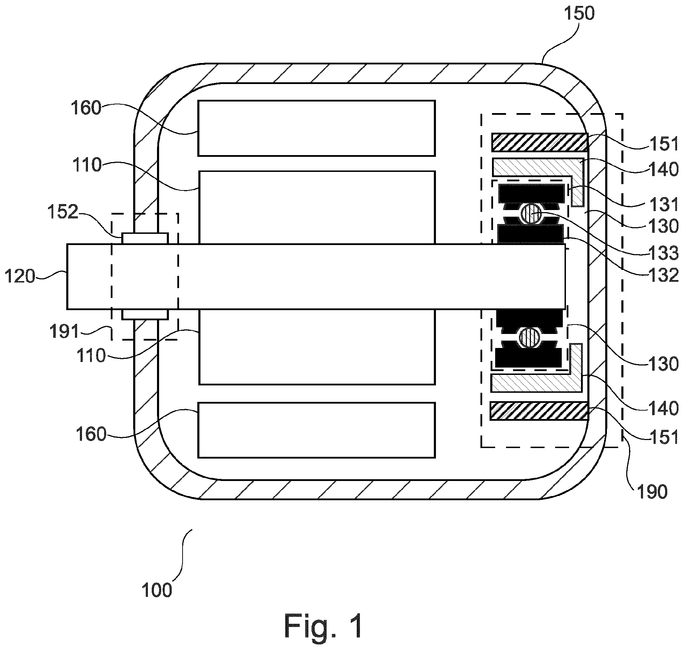

Figure 1 shows a cross-sectional view of an electric machine 100 for vehicle propulsion.

The electric machine 100 comprises a cylindrically shaped housing 150 having an inner cavity.

The electric machine 100 further comprises a tube-shaped stator, a tube-shaped rotor 110, and a rotor shaft 120.

Moreover, the electric machine 100 comprises a tube-shaped first electrical insulation element 140 and a first ball bearing 130.

The tube-shaped stator is arranged inside the inner cavity such that the outer surface of the stator is surrounded circumferentially by the inner surface of the curved section of the housing 150.

The axial axis of the housing 150 is aligned with the axial axis of the stator.

Further, the stator circumferentially surrounds the tube-shaped rotor 110.

The axial axis of the tube-shaped rotor 110 is aligned with the axial axis of the stator.

The tube-shaped rotor 110 receives a rotor shaft 120 through the hollow section of the rotor 110.

The rotor shaft 120 is a rod and extends through a second opening 152 in a first base of the housing 150 for providing torque to outside of the housing 150, and eventually to a drive unit of a vehicle for a propulsion.

The rotor shaft 120 is rotationally and axially fastened to the rotor 110.

The axial axis of the rotor shaft 120 is aligned with the axial axis of the rotor 110.

In a second base of the housing 150, i.e., a wall opposite to the wall comprising the second opening 152 in the housing 150, the housing 150 comprises a ring-shaped tube segment, i.e., a suspending portion 151, extending from the second base in the direction towards the first base of the housing 150.

The suspending portion 151 surrounds the tube-shaped first electrical insulation element 140 circumferentially.

The first electrical insulation element 140 in turn surrounds the ball bearing 130.

The first ball bearing 130 comprises an inner race 132, and outer race 131, and a plurality of balls 133.

The inner race 132 and the outer race 131 are both tube-shaped, and a plurality of balls 133 are arranged between the inner race 132 and the outer race 131.

The inner surface of the inner race 132 faces the rotor shaft 120, and the outer surface of the outer race 131 faces the inner surface of the first electrical insulation element 140.

Among others, for reducing the friction, the ball bearing 130 is lubricated.

In operation, the current runs through the windings of the stator, which in turn generates magnetic field. The generated magnetic field passes through the rotor armature, thereby exerting for on the rotor 110 windings to turn the rotor shaft 120. The strong current in the stator windings may charge the rotor 110, inducing an internal voltage.

At a low internal voltage, the lubrication serves as a thin electrical insulation film between the balls 133 and the neighboring races of the ball bearing 130 in operation.

However, when the internal voltage increases above a breakthrough voltage for the insulation film, the charges may be discharged through the bearing and reach the conductive housing 150, in the absence of the first electrical insulation element 140. Such discharge may heat up the first ball bearing 130 locally, which leads to local deformation of the ball bearing 130.

The first electrical insulation element 140 prevents such electrical discharge through the first ball bearing 130.

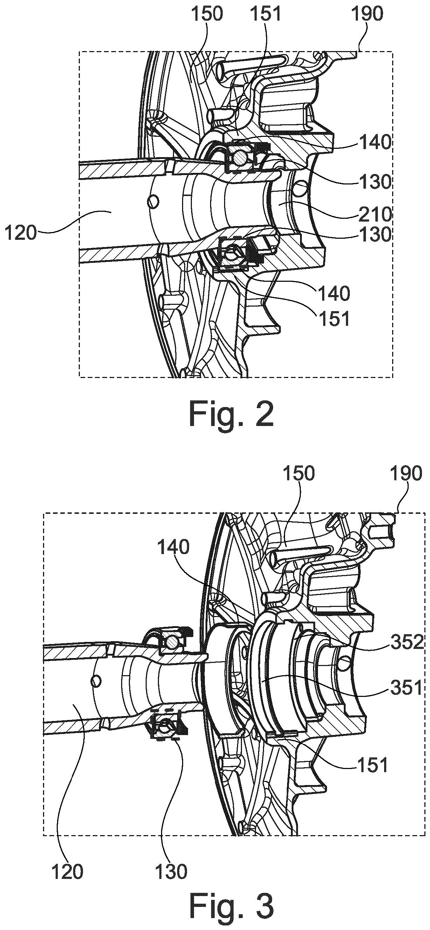

Figure 2 illustrates a zoomed in view of a first section 190 around the first electrical insulation element 140 as shown in Figure 1.

It is understood that Figure 1 illustrates a symbolic representation of the components comprised in the electric machine 100. Accordingly, the components in Figure 2 may be further detailed in comparison to Figure 1.

For instance, the second base of the housing 150, which comprises the suspending portion 151, further comprises a first opening 210.

However, the rotor shaft 120 does not extend through such opening 210.

Further, for instance, the rotor shaft 120 is not cylindrically shaped, but the circumference of the rotor shaft 120 decreases along the axial direction towards such opening 210.

The suspending portion 151 of the first opening 210 circumferentially surrounds the first electrical insulation element 140. The suspending portion 151 aids the axial positioning of the first electrical insulation element 140. The first electrical insulation element 140 in turn circumferentially surrounds the outer race 131 of the first ball bearing 130. The bearing balls 133 of the first ball bearing 130 are arranged between the outer race 131 and inner race 132, and the inner race 132 suspends the rotor shaft 120. The arrangement of the components is further elaborated in reference to Figure 3.

Figure 3 illustrates an exploded view of the first section 190 of the electric machine 100 as shown in Figure 2.

In Figure 3, the suspending portion 151 comprises a recess 351, or a groove, running through a circumference of the inner surface of the suspending portion 151.

In recess 351, a corresponding protrusion running along the circumference of the outer surface of the first electrical insulation element 140 can be fitted in for interlocking the first electrical insulation element 140 in the axial direction.

For simplicity, such protrusion is omitted in Figure 3.

Further, the suspending portion 151 comprises a flange 352 extending from one edge of the suspending portion 151 towards radially inwards.

The flange of the suspending portion 151 is located after the first electrical insulation element 140 in the axial direction away from the opposite wall of the housing 150.

Accordingly, the flange of the suspending portion 151 aids positioning of the electrical insulation element and prevents the first electrical insulation element 140 from axially slipping, away from the cavity of the housing 150 where the stator is located, in the axial direction away from the opposite wall of the housing 150.

The first ball bearing 130 on the non-driving side of the housing 150 is axially floating, i.e., axially movable, within the cavity of the suspending portion 151 of the first opening 210, so as to accommodate any physical dimensional changes of the components involved, e.g., due to thermal expansion.

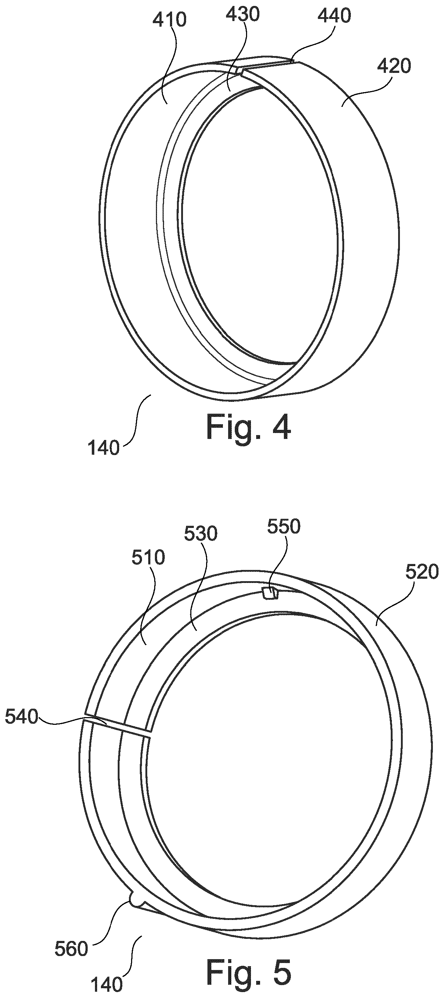

Figure 4 illustrates an example of the first electrical insulation element 140 of Figures 1, 2, and 3.

The first electrical insulation element 140 comprises a ring-shaped tube segment.

The tube segment comprises an inner surface 410 and an outer surface 420.

The tube segment further comprises a gap 440 along the axial direction.

The gap 440 extends from one edge of the tube segment to the other edge of the tube segment.

The first electrical insulation element 140 further comprises a flange 430 extending from an edge of the tube segment towards radially inwards.

The flange comprises a gap 440 along the axial direction.

The gap 440 extends from the edge of the tube segment towards radially inwards until the inner circumference of the flange.

The width of the gap 440 of the tube segment is the same as the width of the gap 440 of the flange.

The gap 440 of the tube segment is aligned with the gap 440 of the flange.

The arrangement of the first electrical insulation element 140 is described above in reference to Figures 1 to 3.

Specifically, the ball bearing 130 is circumferentially surrounded first the first electrical insulation element 140.

In operation, the ball bearing 130 may undergo a thermal expansion.

The gap 440 in the first electrical insulation element 140 allows the first electrical insulation element 140 to stretch and accommodate the expanded ball bearing 130.

The flange 430 of the first electrical insulation element 140 prevents the ball bearing 130 from slipping in the axial direction.

Figure 5 illustrates another example of the first first electrical insulation element 140.

The first electrical insulation element 140 comprises a ring-shaped tube section comprising an inner surface 510 and an outer surface 520, a flange 530, and a gap 550.

The structure of the ring-shaped tube section, the flange 530, and the gap 540 as shown in Figure 5 correspond to those of the ring-shaped tube section, the flange 430, and the gap 440 as shown in Figure 4.

The first electrical insulation element 140 further comprises an outer protrusion 560 on the outer surface 520 stretching along the axial direction.

The outer protrusion 560 extends from one edge of the tube segment to the other edge of the tube segment.

Such outer protrusion 560 is fitted into the corresponding recess on the inner surface of the suspending portion 151 of the housing 150 as described above in reference to Figure 3.

Such recess is omitted in Figure 3 for simplicity.

When fitted, the first electrical insulation element 140 is rotationally locked against the housing 150.

The first electrical insulation element 140 further comprises an inner protrusion 550 extending from the inner surface 510 of the tube segment to the inner surface of the flange 530, i.e., the surface of the flange 530 facing the bearing.

The inner protrusion 550 is fitted into the corresponding recess on the outer surface of the outer race 131 of the ball bearing 130 as described above in reference to Figure 3.

When fitted, the first electrical insulation element 140 is rotationally locked against the outer race 131 of the ball bearing 130.

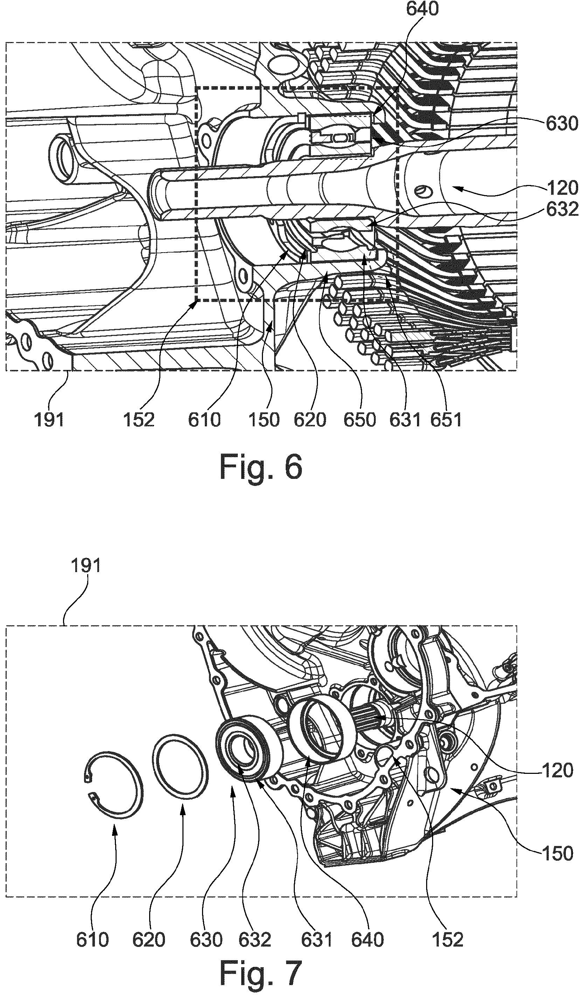

Figure 6 illustrates zoomed-in view of the second section 191 of the electric machine as shown in Figure 1, and Figure 7 illustrates an exploded view of the components shown in Figure 6.

Specifically, Figure 6 further illustrates the second opening 152 in the housing 150 of the electric machine 100 in detail.

The second opening 152 is comprised in a wall opposite to the wall comprising the first opening 210.

The second opening 152 arranges the rotor shaft 120 therethrough such that the torque can be delivered from the rotor shaft 120 to a further driving unit. Accordingly, this side of the electric machine 100 is called a driving side.

The second opening 152 comprises a ring-shaped tube segment as a suspending portion 650 for arranging the rotor shaft 120 therethrough. The second opening 152 comprises a flange 651 extending from an edge of the suspending portion towards the radial center of the suspending portion. Such flange aids the axial positioning of the second ball bearing 630 in place and prevents second ball bearing 630 from sliding axially into the cavity of the housing 150 of the electric machine 100.

The suspending portion 650 of the second opening 152 is electrically conductive. Thus, in order to insulate the second ball bearing 630, a further first electrical insulation element 640 is arranged between the suspending portion 650 and the second ball bearing 630. The electrical insulation element 640 is another first electrical insulation element further to the first electrical insulation element 140 which is arranged on the non-driving side of the housing 150. The electrical insulation element as shown in Figure 5 is used as the further first electrical insulation element 640 in Figures 6 and 7.

The side comprising the flange of the further first electrical insulation element 640 is arranged towards the flange 651 of the suspending portion of the second opening 152, for electrically insulating the second ball bearing 630 from the housing 150. The inner protrusion 550 of the further first electrical insulation element 640 rotationally interlocks the further first electrical insulation element 640 and the second ball bearing 630, specifically the outer race 631 thereof. The outer protrusion 560 of the further first electrical insulation element 640 rotationally interlocks the housing 150 and the further first electrical insulation element 640.

The tube-segment of the further first electrical insulation element 640 circumferentially surrounds the second ball bearing 630. The second ball bearing 630 comprises bearing balls arranged between an inner race 632 and outer race 631. The rotor shaft 120 is arranged through the inner race 632 as shown in Figure 6.

The second ball bearing 630 is so-called a fixed bearing, or a non-floating bearing, because the bearing is axially fixed in place by a circlip 610. The circlip 610 is ring-shaped or disc-shaped, and is circumferentially discontinuous at one point for allowing an easy adjustment of the shape and diameter by flexibly and temporarily deforming the circlip 610. This way, the circlip 610 can be fitted or snapped into a corresponding recess of groove on the inner surface of the suspending portion 650 of the second opening 152. Consequently, the second ball bearing 630 is axially interlocked with the housing 150 of the electric machine 100. The arrangement of the circlip 610 is shown in Figure 6.

Such circlip 610 is often made of metal for various reasons including, providing a required elasticity and high tensile strength, preventing mechanical and thermal deformation, and others. However, this requires an additional electrical insulation element, in addition to the further first electrical insulation element 640, to insulate the second ball bearing 630. For this, the disc-shaped second electrical insulation element 620 is arranged between the circlip 610 and the second ball bearing 630. The second electrical insulation element 620 together with the further first electrical insulation element 640 surrounds the outer race both radially and axially for electrically insulating the second ball bearing 630. The second electrical insulation element 620 may be formed as a further flange extending radially inwards from an edge of the further first electrical insulation element 640, and consequently the second electrical insulation element 620 and the further first electrical insulation element 640 may form parts of a singular electrical insulation element assembly.

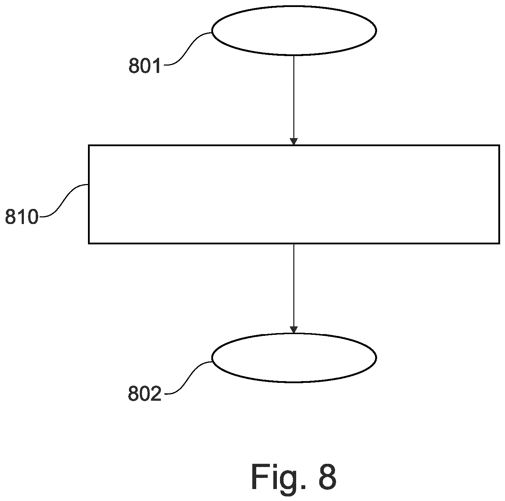

Figure 8 illustrates a method for manufacturing the electric machine 100 as shown in Figures 1 to 3.

The method starts at 801.

At 810, a first electrical insulation element 140 is interposed between the at least one bearing and the housing 150 of the electric machine 100.

The method ends at 802.

The method further comprises rotationally locking the first electrical insulation element 140 against the housing 150.

Referring to the electrical insulation element 140 of Figure 5 and the electrical housing 150 of Figures 1 to 3, the first electrical insulation element 140 may be locked against the housing 150 by fitting the outer protrusion 560 of the first electrical insulation element 140 into the corresponding recess on the inner surface of the suspending portion 151 of the housing 150.

Additionally or alternatively, the method further comprises rotationally locking the first electrical insulation element 140 against the ball bearing 130.

Referring to the electrical insulation element 140 of Figure 5 and the electrical housing 150 of Figures 1 to 3, the first electrical insulation element 140 may be locked against the at least one bearing by fitting the inner protrusion 550 of the first electrical insulation element 140 into the corresponding recess on the outer surface of outer race 131 of the ball bearing 130.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: Electric machine
- 110: Rotor
- 120: Rotor shaft
- 130: First ball bearing
- 131: Outer race
- 132: Inner race
- 133: Plurality of balls
- 140: First electrical insulation element
- 150: Housing
- 151: Suspending portion
- 152: Second opening
- 160: Stator
- 190: First section
- 191: Second section
- 210: First opening
- 351: Recess
- 352: Flange
- 410: Inner surface
- 420: Outer surface
- 430: Flange
- 440: Gap
- 510: Inner surface
- 520: Outer surface
- 530: Flange
- 540: Gap
- 550: Inner protrusion
- 560: Outer protrusion
- 610: Circlip
- 620: Second electrical insulation element
- 630: Second ball bearing
- 631: Outer race
- 632: Inner race
- 640: Further first electrical insulation element
- 801: Start
- 802: End
- 810: First step

## Claims

1. An electric machine (100) for vehicle propulsion, the electric machine (100) comprising:
• a housing (150);
• a rotor (110) with a rotor shaft (120);
• at least one bearing (130); and
• a first electrical insulation element (140) having an inner cavity,
wherein the rotor shaft (120) is supported on the housing (150) of the electric machine (100) by the at least one bearing (130),
wherein the at least one bearing (130) is arranged in the inner cavity of the first electrical insulation element (140), and
wherein the electrical insulation element (140) is rigid.

2. The electric machine (100) of claim 1, wherein the first electrical insulation element (140) comprises a ring-shaped tube segment circumferentially surrounding the at least one bearing (130).

3. The electric machine (100) of claim 1 or 2, wherein the first electrical insulation element (140) has a flange (430) extending radially inward for axially positioning the at least one bearing (130).

4. The electric machine (100) of any one of the preceding claims, wherein the first electrical insulation element (140) comprises at least one of a non-conducting metal, a polymer composite material, a hybrid composite material, and a 3D printable material.

5. The electric machine (100) of any one of the preceding claims, further comprising a second electrical insulation element (620) being arranged between the at least one bearing (630) and a retaining ring (610) of the electric machine (100), for electrically insulating the at least one bearing (630).

6. The electric machine (100) of any one of the preceding claims,
wherein the first electrical insulation element (140) has at least one protrusion (550) on an inner surface (510) and the at least one bearing (130) has at least one recess on a surface facing the first electrical insulation element (140) for fitting into the at least one protrusion (550) of the first electrical insulation element (140), and/or
wherein the first electrical insulation element (140) has at least one recess on an inner surface (510) and the at least one bearing (130) has at least one protrusion on a surface facing the first electrical insulation element (140) for fitting into the at least one recess of the first electrical insulation element (140).

7. The electric machine (100) of any one of the preceding claims,
wherein the first electrical insulation element (140) has at least one protrusion (560) on an outer surface (520) and the housing (150) has at least one recess on a surface facing first the electrical insulation element (140) for fitting into the at least one protrusion of the first electrical insulation element (140), and/or
wherein the first electrical insulation element (140) has at least one recess on an outer surface and the housing (150) has at least one protrusion on a surface facing the first electrical insulation element (140) for fitting into the at least one recess of the first electrical insulation element (140).

8. The electric machine (100) of any one of the preceding claims,
wherein the first electrical insulation element (140) is rotationally locked against the housing (150), and/or
wherein the first electrical insulation element (140) is rotationally locked against the at least one bearing (130).

9. A first electrical insulation element (140) for the electric machine (100) of any one of claims 1 to 8, the first electrical insulation element (140) being rigid and having an inner cavity for receiving at least one bearing (130) supporting a rotor shaft (120).

10. The first electrical insulation element (140) of claim 9, wherein the electrical insulation element (140) comprises a ring-shaped tube segment.

11. The first electrical insulation element (140) of claim 10, wherein the electrical insulation element (140) has a flange (430) extending radially from the ring-shaped tube segment for positioning the at least one bearing (130).

12. The first electrical insulation element (140) of any one of claims 9 to 11,
wherein the first electrical insulation element (140) has at least one protrusion (550) and/or at least one recess on an inner surface, and/or
wherein the electrical insulation element (140) has at least one protrusion and/or at least one recess on an outer surface (560).

13. The first electrical insulation element (140) of any one of claims 9 to 12, wherein the first electrical insulation element (140) comprises at least one of a non-conducting metal, a polymer composite material, a hybrid composite material, and a 3D printable material.

14. A method for manufacturing the electric machine (100) of any one of claims 1 to 8, the method comprising:
interposing a first electrical insulation element (140) between the at least one bearing (130) and the housing (150) of the electric machine (100).

15. The method of claim 14, further comprising:
rotationally locking the first electrical insulation element (140) against the housing (150); and/or
rotationally locking the first electrical insulation element (140) against the at least one bearing (130).
